# EUROPÄISCHE PATENTSCHRIFT

(11) **EP 3 649 392 B1**
(45) Veröffentlichungstag und Bekanntmachung des Hinweises auf die Patenterteilung: **23.11.2022**
(21) Anmeldenummer: 18732750.7
(22) Anmeldetag: 19.06.2018
(51) Int. Cl.: F16L 41/00, G01D 11/24, G01D 11/30, G01F 1/66, G01F 15/18

(54) **MESSROHR ZUR BESTIMMUNG UND/ODER ÜBERWACHUNG ZUMINDEST EINER PROZESSGRÖSSE EINES MEDIUMS**
MEASURING TUBE FOR DETECTING AND/OR MONITORING AT LEAST ONE PROCESS VARIABLE OF A MEDIUM
TUBE DE MESURE ET TUBE DE MESURE POUR DETERMINER ET/OU SURVEILLER AU MOINS UNE GRANDEUR DE PROCESSUS D'UN FLUIDE

(30) Priorität: 06.07.2017 DE 102017115139
(43) Veröffentlichungstag der Anmeldung: 13.05.2020
(73) Patentinhaber: Endress+Hauser SE+Co. KG, 79689 Maulburg (DE)
(72) Erfinder: SCHMIDT, Robert, 79650 Schopfheim (DE); KRUMBHOLZ, Andreas, 79689 Maulburg (DE)
(74) Vertreter: Koslowski, Christine Adelheid
(86) Internationale Anmeldenummer: PCT/EP2018/066253
(87) Internationale Veröffentlichungsnummer: WO 2019/007669

(56) Entgegenhaltungen:
- EP-A1- 0 440 867
- DE-A1-102010 037 994
- DE-A1-102013 100 158
- DE-A1-102013 216 948

## Beschreibung

Die Erfindung betrifft ein Messrohr zum Führen eines Mediums sowie eine modulare Anordnung zur Bestimmung und/oder Überwachung zumindest einer Prozessgröße mit einem Sensor und einem erfindungsgemäßen Messrohr. Der Sensor ist dabei insbesondere in das Messrohr einbringbar, welches wiederum in ein bestehendes Rohrleitungssystem integriert werden kann.

Messanordnungen mit einem Sensor und einem Messrohr werden in der Automatisierungstechnik im Zusammenhang mit einer Vielzahl von Messgeräten und/oder Feldgeräten zur Bestimmung unterschiedlicher Prozessgrößen eingesetzt, welche in großer Vielfalt von der Anmelderin hergestellt und vertrieben werden. Die Prozessgröße ist beispielsweise der Durchfluss oder der Füllstand eines strömenden Fluides, oder auch der Druck, die Dichte, die Viskosität, die Leitfähigkeit, die Temperatur oder der ph-Wert eines Fluides. Aber auch optische Sensoren, wie Trübungs- oder Absorptionssensoren sind bekannt und fallen unter die vorliegende Erfindung.

Die Sensoren werden in vielen Fällen mittels geeigneter Dichtungsmechanismen form- und/oder kraftschlüssig in ein Messrohr integriert oder auch direkt mit dem Messrohr verschweißt und/oder verklebt. Das Messrohr wiederum wird mit geeigneten, dem Fachmann bekannten Mitteln beispielsweise in ein bestehendes Rohrleitungssystem integriert.

Beim Einbringen des jeweiligen Sensors in das Messrohr können nachteilig Spalte, Fugen und/oder Toträume entstehen. Für eine Reihe von Anwendungen, wie in der sterilen Verfahrenstechnik, beispielsweise im Bereich der Pharmazie, Nahrungs- und/oder Lebensmittelindustrie, sind solche Spalte, Fugen und/oder Toträume zwischen den einzelnen Komponenten nicht oder nur in sehr begrenztem Maße akzeptabel. In solchen Verbindungsbereichen finden sich nämlich potentielle Sammelbecken für gesundheitsgefährdende Keime. Um beispielsweise Ablagerungen bzw. die Bildung eines Biofilms innerhalb einer Rohrleitung zu verhindern, sollte eine möglichst rückstandsfreie Reinigung gewährleistet werden.

In diesem Zusammenhang haben verschiedene internationale oder nationale Kontrollbehörden Standards, u. a. für die Herstellung, und Ausgestaltung von für die sterile Verfahrenstechnik zugelassenem Equipment erarbeitet. Beispielhaft sei hier auf die jeweiligen Standards der "American Society of Mechanical Engineers" (ASME), insbesondere auf den sog. "ASME Bioprocessing Equipment - Standard" (BPE), der "3-A Sanitary Standards Incorporation" (3-A), oder auch der "European Hygienic Design Group" (EHEDG) verwiesen. Die Standards gemäß ASME, BPE und 3A sind dabei insbesondere für den amerikanischen Raum relevant, während der Standard gemäß EHEDG mehrheitlich in Europa zum Tragen kommt. Typische in diesen Standards formulierte Anforderungen an ein Bauteil betreffen insbesondere die Geometrie und/oder Oberfläche des jeweiligen Bauteils, welches derart beschaffen sein sollte, dass sich keine Ablagerungen bilden können und das jeweilige Bauteil einfach zu reinigen und/oder sterilisieren ist. Der Standard gemäß EHEDG schließt beispielsweise das Auftreten schmaler Spalte aus.

In Bezug auf mit diesen Standards konforme Messgeräte sei beispielsweise auf der DE102013100158A1 verwiesen, die eine einstückige Vorrichtung mit einem Sensor und einem Rohrleitungsabschnitt mit T-Form beschreibt. Der Sensor ist in einem Teilbereich des Adapters so angeordnet, dass die dem Medium zugewandte Stirnfläche des Sensors frontbündig zu der Innenfläche des ersten Teilbereichs des Adapters liegt. Die Stirnfläche des Sensors ist also quasi integraler Teil der Innenfläche des ersten Teilbereichs des Adapters. Diese, in Bezug auf die Fertigung jedoch vergleichsweise aufwendige, Konstruktion vermeidet eine Spaltbildung in den Verbindungsbereichen.

Aus der bisher unveröffentlichten deutschen Patentanmeldung mit dem Aktenzeichen 102016121643.7 ist ferner eine Messanordnung mit einem Sensor bekannt geworden, welcher in eine Öffnung eines Rohrleitungsabschnitts lösbar einbringbar ist. Zur Vermeidung von Spalten in den Verbindungsbereichen ist zumindest eine Komponente des Sensors so ausgestaltet, dass sie im eingebauten Zustand frontbündig mit einer Innenwandung des Rohrleitungsabschnitts abschließt. Die zumindest eine Komponente des Sensors wird also an eine Geometrie des Rohrleitungsabschnitts angepasst. Auch diese Variante zeichnet sich durch einen vergleichsweise hohen konstruktiven Aufbau aus.

Aus der Patentanmeldung DE 10 2010 037 994 A1 ist eine Messanordnung mit einem Sensor bekannt, die eine totraumfreie Messstelle an einer Rohrleitung bereitstellt.

Der vorliegenden Erfindung liegt die Aufgabe zugrunde, eine Messanordnung bereitzustellen, welche auf einfache Weise den üblichen Hygiene-Anforderungen gerecht wird.

Diese Aufgabe wird gelöst durch das Messrohr gemäß Anspruch 1 und durch die Anordnung nach Anspruch 8.

Bezüglich des Messrohrs wird die der Erfindung zugrundeliegende Aufgabe gelöst durch ein Messrohr zum Führen eines Mediums. Das Messrohr umfasst zumindest einen Rohrleitungsabschnitt und zumindest einen rohrförmigen Körper zur Aufnahme zumindest einer Komponente eines Messgeräts. Der rohrförmige Körper ist in einem Endbereich an oder in einer Öffnung in einer Wandung entlang einer Längsachse des Rohrleitungsabschnitts angeordnet. Erfindungsgemäß befinden sich alle Punkte zumindest eines ersten Teilbereichs der Wandung, insbesondere Innenwandung, des Rohrleitungsabschnitts, welcher die Öffnung definiert, in einer Ebene.

Generell ist die Wandung, insbesondere die Innenwandung, des Rohrleitungsabschnitts an dessen Querschnittsfläche angepasst und zumindest teilweise gewölbt ausgebildet. In vielen Fällen weist der Rohrleitungsabschnitt beispielsweise eine kreisrunde Querschnittsfläche auf. Zumindest im Bereich der Öffnung, also in jenem Teilbereich der Wandung, insbesondere Innenwandung, welche unmittelbar an die Öffnung anschließt, ist die Wandung jedoch im Wesentlichen planar ausgebildet. Dabei ist einerseits denkbar, dass im Wesentlichen nur jener Teilbereich des Rohrleitungsabschnitts, welcher die Öffnung definiert, planar ausgebildet ist. Andererseits kann es sich aber auch um eine vorzugsweise rotationssymmetrische, insbesondere ringförmige Fläche um die, vorzugsweise rotationssymmetrische, insbesondere kreisrund, ausgestaltete Öffnung herum handeln. In jedem Falle beinhaltet der planar ausgebildete Teilbereich jenen Bereich, in welchem die Öffnung angeordnet ist. Die erfindungsgemäße Ausgestaltung eines Messrohrs gewährleistet einen spalt- und/oder totraumfreien Übergang zwischen der Wandung, insbesondere Innenwandung des Rohrleitungsabschnitts und der jeweiligen in den rohrförmigen Körper einbringbaren Komponente des jeweiligen Messgeräts.

Vorteilhaft bedarf es zur Einhaltung der gängigen Hygieneanforderungen keiner weiteren Modifikation der jeweils in den rohrförmigen Körper eingebrachten Komponente des jeweiligen Sensors. Die Komponente, bzw. eine Stirnfläche der Komponente, kann so angeordnet werden, dass diese im Wesentlichen frontbündig mit der Wandung des Rohrleitungsabschnitts im Bereich der Öffnung, an oder in welcher der rohrförmige Körper angeordnet ist, abschließt. Es können also ohne spezielle Anforderungen an die Komponente des Sensors die gängigen Hygienebestimmungen eingehalten werden, beispielsweise kann ein spaltfreier Übergang zwischen der Komponente und der Wandung des Rohrleitungsabschnitts gewährleistet werden.

Der Rohrleitungsabschnitt umfasst zwei weitere Öffnungen, beispielsweise zum Einbringen des Messrohres in ein bestehendes Rohrleitungssystem. Diese beiden Öffnungen sind im Falle eines geraden Rohrleitungsabschnitts üblicherweise entlang einer gemeinsamen Längsachse des Rohrleitungsabschnitts angeordnet. Die vorliegende Erfindung ist jedoch keinesfalls auf derartige Rohrleitungsabschnitte begrenzt. Vielmehr kann der Rohrleitungsabschnitt auch zumindest ein gebogenes Segment aufweisen.

Zur Befestigung des Rohrleitungsabschnittes in einem bestehenden Rohrleitungssystem sind alle dem Fachmann allgemein bekannten Befestigungsweisen denkbar, wie beispielsweise Flansch- oder Schweißverbindungen.

Es sei ferner darauf verwiesen, dass es sich bei dem erfindungsgemäßen Messrohr sowohl um ein einstückig hergestelltes als auch um ein aus mehreren Komponenten zusammengefügtes Bauelement handeln kann. Dies kann je nach eingesetztem Herstellungsverfahren variieren. Beispielsweise kann es sich bei dem Messrohr um aus einem oder mehreren gefrästen Komponenten aufgebautes Bauteil handeln. Mehrere Komponenten können beispielsweise miteinander verschweißt werden. Aber auch andere geeignete dem Fachmann hinlänglich bekannte Fertigungsverfahren, beispielsweise generative, oder auch additive, Fertigungsverfahren sind zur Herstellung eines erfindungsgemäßen Messrohrs möglich. Im Falle eines generativen, oder auch additiven Fertigungsverfahrens, wie beispielsweise einem 3D-Druck-Verfahren, entstehen in einem Urformprozess plastische Teile. Solche generativen Fertigungsverfahren, welche im Prinzip eine industrialisierte und massentaugliche Weiterentwicklung des sogenannten Rapid Prototyping darstellen, halten seit einigen Jahren zunehmend Einzug in der industriellen Fertigung. Die gängigen, unterschiedlichen Herstellungsverfahren sind dem Fachmann bestens bekannt und werden deswegen an dieser Stelle nicht im Detail erläutert.

In einer Ausgestaltung des Messrohrs verläuft eine Längsachse des rohrförmigen Körpers im Wesentlichen in einem vorgebbaren Winkel, insbesondere senkrecht, zur Längsachse des Rohrleitungsabschnitts. Die beiden Längsachsen sind also rechtwinklig zueinander. Somit handelt es sich bei dem Messrohr also beispielsweise um ein Messrohr in Form eines T-Stücks.

In einer Ausgestaltung handelt es sich bei der zumindest einen Komponente des Messgeräts um eine Komponente eines Sensorelements. Insbesondere handelt es sich bei der Komponente um eine Komponente, welche im fortlaufenden Betrieb des Messgeräts zumindest zeitweise und/oder teilweise prozessberührend, also mediumsberührend, ist. In dieser Hinsicht ist es von Vorteil, wenn der rohrförmige Körper eine Befestigungseinheit, insbesondere ein Gewinde, zur Befestigung der zumindest einen Komponente an oder in dem rohrförmigen Körper umfasst. Die Befestigungseinheit ist dabei bevorzugt im dem Rohrleitungsabschnitt abgewandten Endbereich des rohrförmigen Körpers angeordnet.

Gemäß der Erfindung ist ein Flächeninhalt einer Querschnittsfläche des Rohrleitungsabschnitts entlang einer Längsachse durch den Rohrleitungsabschnitt im Wesentlichen konstant. Die Größe der Querschnittsfläche bleibt also entlang der Längsachse im Wesentlichen konstant. Dies ist insbesondere vorteilhaft mit Hinblick auf das Strömungsprofil des jeweiligen Mediums durch das Messrohr. Bei gleichbleibendem Durchfluss können so ortsabhängige Änderungen der Durchflussgeschwindigkeit entlang der Längsachse des Rohrleitungsabschnitts vermieden werden.

Gemäß der Erfindung variiert eine Form der Querschnittsfläche des Rohrleitungsabschnitts entlang einer Längsachse durch den Rohrleitungsabschnitt, insbesondere kontinuierlich. Hierbei ist es von Vorteil, wenn die Querschnittsfläche des Rohrleitungsabschnitts zumindest in einem Endbereich des Rohrleitungsabschnitts im Wesentlichen die gleiche Form wie diejenige einer Querschnittsfläche einer bestehenden Rohrleitung aufweist. In dem zumindest einen Endbereich kann die Querschnittsfläche des Rohrleitungsabschnitts dann im Falle eines Rohrleitungssystems mit kreisrunder Querschnittsfläche beispielsweise ebenfalls kreisrund ausgebildet sein. Im Bereich der Öffnung, an oder in welcher der rohrförmige Körper angeordnet ist, weist ein Umfang der Querschnittsfläche zumindest ein planar ausgebildetes Segment auf.

Noch eine besonders bevorzugte Ausgestaltung des Messrohres beinhaltet, dass ein Abstand zwischen einer gedachten Gerade im Bereich der Wandung, insbesondere der Innenwandung, des Rohrleitungsabschnitts im Bereich der Öffnung und der Längsachse durch den Rohrleitungsabschnitt im Bereich der Öffnung kleiner gleich einem Abstand zwischen einer gedachten Gerade im Bereich der Wandung, insbesondere der Innenwandung, des Rohrleitungsabschnittes in zumindest einem der zwei Endbereiche des Rohrleitungsabschnitts und der Längsachse durch den Rohrleitungsabschnitt im Bereich der Öffnung ist. Die Längsachse verläuft zumindest im Bereich, in welchem sich die Öffnung befindet, parallel zu zumindest der Wandung im ersten Teilbereich, also parallel zu der Ebene, in welcher alle Punkte des ersten Teilbereichs liegen. Auf diese Weise kann die Bildung von Ablagerungen oder Luftblasen vermieden werden. Luftblasen sammeln sich dabei insbesondere im oberen Bereich des Messrohrs Luftblasen an, während das Ansammeln von Ablagerungen im unteren Bereich des Messrohres besonders problematisch ist.

Eine weitere Ausgestaltung des Messrohres sieht vor, dass die Wandung, insbesondere Innenwandung des Rohrleitungsabschnitts in zumindest zwei weiteren Teilbereichen planar ausgebildet ist derart, dass je zwei der Teilbereiche zumindest abschnittsweise durch einen gewölbt ausgebildeten Abschnitt der Wandung insb. Innenwandung des Rohrleitungsabschnitts verbunden sind. Bevorzugt weisen die zumindest drei Teilbereiche die gleiche Länge parallel zur Längsachse durch den Rohrleitungsabschnitt auf und haben jeweils gleiche Abstände zu zumindest einem der beiden Endbereichen des Rohrleitungsabschnitts.

Die der Erfindung zugrundeliegende Aufgabe wird außerdem gelöst durch eine, insbesondere modulare, Anordnung zur Bestimmung und/oder Überwachung zumindest einer Prozessgröße eines Mediums in einer Rohrleitung, zumindest umfassend
- ein Messgerät zur Bestimmung und/oder Überwachung der zumindest einen Prozessgröße mit zumindest einem Sensorelement und einer Elektronikeinheit, und
- ein Messrohr nach zumindest einem der Ansprüche 1-7, in welches zumindest eine Komponente des Messgeräts, insbesondere lösbar einbringbar ist.

Die Komponente, bzw. zumindest eine dem Medium zugewandte Stirnfläche der Komponente, welche in das Messrohr einbringbar ist, wird bevorzugt im laufenden Betrieb der Messanordnung zumindest teilweise und/oder zeitweise mit dem Medium in Kontakt gebracht. Da die Komponente, bzw. die Stirnfläche der Komponente, im Wesentlichen frontbündig mit der dritten Öffnung des Rohrleitungsabschnittes abschließt, beschränkt sich der Kontaktbereich zwischen Sensor und Medium vorteilhaft auf diese Fläche.

Die frontbündige Anordnung gewährleistet ferner eine im Wesentlichen rückstandsfreie Reinigung der Anordnung, was insbesondere für Anwendungen in der sterilen Verfahrenstechnik relevant ist.

Der rohrförmige Körper sowie die zumindest eine Komponente sind bevorzugt derart ausgestaltet, dass die Komponente passgenau in den rohrförmigen Körper einbringbar ist. Im Falle einer zylindrisch ausgestalteten Komponente weist der rohrförmige Körper bevorzugt eine kreisrunde Querschnittsfläche auf, deren Radius an die Abmessungen der zylindrisch ausgestalteten Komponente angepasst ist. In einer Ausgestaltung kann es sich bei dem rohrförmigen Körper auch um zumindest einen Teil eines Gehäuses der Komponente handeln.

In einer Ausgestaltung der Anordnung ist die zumindest eine Komponente derart ausgestaltet, dass sie im Falle, dass sie in den rohrförmigen Körper eingebracht ist, im Wesentlichen frontbündig mit der Wandung des Rohrleitungsabschnitts im ersten Teilbereich, abschließt.

In einer besonders bevorzugten Ausgestaltung ist ein Übergang zwischen dem rohrförmigen Körper und dem ersten Teilbereich der Wandung des Rohrleitungsabschnitts im Wesentlichen spaltfrei und/oder totraumfrei.

Zwischen der zumindest einen Komponente und dem ersten Teilbereich der Wandung des Rohrleitungsabschnitts können sich entsprechend vorteilhaft keine Ablagerungen oder Verschmutzungen anreichern. Die erfindungsgemäße ist also für den Einsatz, beispielsweise in der sterilen Verfahrenstechnik, bestens geeignet.

Eine weitere Ausgestaltung der Anordnung beinhaltet, dass die zumindest eine Komponente mittels eines Dichtelements in den rohrförmigen Körper eingebracht ist. Hierbei ist es von Vorteil, wenn es sich bei dem Dichtelement um einen O-Ring handelt.

Eine Ausgestaltung sieht vor, dass es sich bei dem Messgerät um ein kapazitives und/oder konduktives Messgerät handelt. Das Sensorelement umfasst dann zumindest eine erste Elektrode und zumindest eine elektrisch von der ersten Elektrode isolierte zweite Elektrode aus. Die zweite Elektrode wird allgemein hin auch als Guard-Elektrode bezeichnet. Es handelt sich in dieser Ausgestaltung also um einen frontbündigen, kapazitiven und/oder konduktiven Sensor, welcher bevorzugt zur Detektion eines vorgebbaren Füllstands, oder der Leitfähigkeit des Mediums eingesetzt wird. Derartige, auch als Multisensoren bezeichnete, Sensoren sind beispielsweise aus den Dokumenten DE102011004807A1, DE102013102055A1, oder auch DE102013104781A1 beschrieben, auf welche hiermit vollumfänglich Bezug genommen wird. Ein entsprechender Sensor wird weiterhin von der Anmelderin unter der Bezeichnung FTW33 hergestellt und vertrieben.

Bei der zumindest einen Komponente des Messgeräts handelt es sich dann bevorzugt um die Elektrodenbaugruppe mit einer, insbesondere kreisförmigen, Stirnfläche, wobei zumindest eine Elektrode der Elektrodenbaugruppe im Wesentlichen mit der Stirnfläche abschließt. Die Stirnfläche kann sowohl planar als auch gewölbt ausgestaltet sein.

welche wiederum bevorzugt im in den rohrförmigen Körper eingebauten Zustand im Wesentlichen frontbündig mit der Wandung des Rohrleitungsabschnitts im ersten Teilbereich abschließt.

Die im Zuge des erfindungsgemäßen Messrohrs angegebenen Ausführungsformen sind mutatis mutandis auch auf die erfindungsgemäße Anordnung anwendbar und umgekehrt.

Die Erfindung wird nachfolgend anhand der Figuren Fig. 1 - Fig. 5 näher erläutert. Es zeigt:
Fig. 1 eine schematische Darstellung eines frontbündigen kapazitiven und/oder konduktiven Sensors gemäß Stand der Technik,
Fig. 2: eine erste Ausgestaltung des erfindungsgemäßen Messrohrs, bei welchem ein Teilbereich der Wandung des Rohrleitungsabschnitts planar ausgebildet ist, in unterschiedlichen Ansichten a)-d),
Fig. 3: weitere Ausgestaltungen des erfindungsgemäßen Messrohrs (a-d), und eine Illustration zur Bildung von Luftblasen und/oder Ablagerungen in einem Innenvolumen des Rohrleitungsabschnitts (e,f),
Fig. 4: eine Ausgestaltung des erfindungsgemäßen Messrohrs, bei welchem vier Teilbereiche der Wandung des Rohrleitungsabschnitts planar ausgebildet sind, und
Fig. 5 eine Ausgestaltung des erfindungsgemäßen Messrohrs, bei welchem drei Teilbereiche der Wandung des Rohrleitungsabschnitts planar ausgebildet sind.

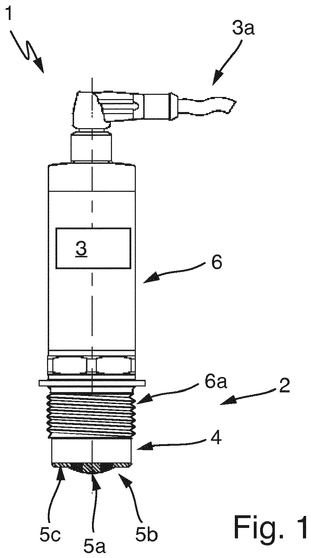

Die vorliegende Erfindung ist auf eine Vielzahl unterschiedlicher Sensoren 1 anwendbar. Ohne Beschränkung der Allgemeinheit bezieht sich die nachfolgende Beschreibung jedoch der Einfachheit halber auf den Fall eines frontbündigen kapazitiven und/oder konduktiven Sensors 1, wie in Fig. 1 schematisch dargestellt. Weiterhin ist die vorliegende Erfindung für eine Vielzahl unterschiedlicher Ausgestaltungen, insbesondere Geometrien, für das Messrohr 7 einsetzbar. Ebenso ohne Beschränkung der Allgemeinheit bezieht sich die nachfolgende Beschreibung der Einfachheit halber jedoch ausschließlich auf ein T-förmiges Messrohr 7. Die Überlegungen lassen sich jeweils analog auf andere Messgeräte 1 und andere Ausgestaltungen des Messrohres 7 anwenden.

Die einem kapazitiven und/oder konduktiven Messgerät, insbesondere einem Füllstandsmessgerät, zugrundeliegenden Messfahren sind an sich aus dem Stand der Technik bekannt. Entsprechende Feldgeräte werden von der Anmelderin beispielsweise unter dem Begriff LIQUIPOINT hergestellt und vertrieben. Eine schematische Darstellung eines entsprechenden Messgeräts 1 ist in Fig. 1 gezeigt. Der Sensor 1 umfasst eine Sensoreinheit 2, welche, wenn das Feldgerät 1 in einen Behälter eingebracht wird, im Wesentlichen frontbündig mit dem Behälter abschließt, sowie eine Elektronikeinheit 3, welche über ein Anschlusskabel 3a beispielsweise mit einer externen Einheit (hier nicht gezeigt) lösbar verbindbar ist.

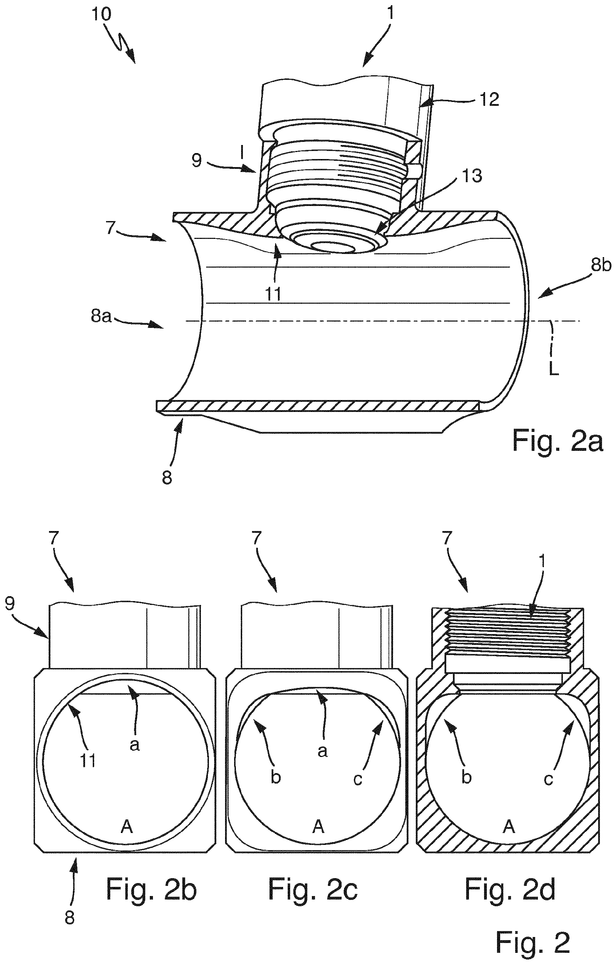

Die Sensoreinheit 2 ist im Wesentlichen koaxial aufgebaut und umfasst eine Elektrodenbaugruppe 4, welche in dem gezeigten Beispiel eine Messelektrode 5a, eine Guardelektrode 5b und eine Masseelektrode 5c umfasst. Es sind jedoch auch Elektrodenbaugruppen 4 mit weniger oder mehr Elektroden 5a-5c möglich. An die Elektrodenbaugruppe 4 schließt sich ein Gehäuse 6 an, in welchem unter anderem die Elektronikeinheit 3 angeordnet ist. Ferner dient der Prozessanschluss 6a zur lösbaren Befestigung des Sensors 1 an einem Behältnis, beispielsweise einem Behälter oder einem Messrohr 7, wie in den Figuren Fig. 2 bis Fig. 4 dargestellt.

Nachfolgend werden beispielhaft unterschiedliche Ausgestaltungen für ein erfindungsgemäßes Messrohr 7 gezeigt. Die einzelnen Ausführungen sind unter einander beliebig kombinierbar. Auch sei darauf verwiesen, dass die vorliegende Erfindung keineswegs auf die gezeigten Varianten beschränkt ist.

Eine erste mögliche Ausgestaltung ist Gegenstand von Fig. 2. In Fig. 2a ist eine perspektivische Ansicht einer erfindungsgemäßen Anordnung 10 mit einem Messgerät 1 wie in Fig.1 und einem erfindungsgemäßen Messrohr 7 gezeigt. Der Rohrleitungsabschnitt 8 weist eine erste 8a und eine zweite Öffnung 8b auf, mittels welchen beiden Öffnungen 8a,8b das Messrohr 7 beispielsweise in ein bestehendes Rohrleitungssystem (nicht gezeigt) integrierbar ist. Im Bereich einer Wandung des Rohrleitungsabschnitts 8 befindet sich eine dritte Öffnung 8c, an welcher der rohrförmige Körper 9 angeordnet ist. Der rohrförmige Körper 9, bzw. eine Längsachse des rohrförmigen Körpers 9 I ist dabei senkrecht zur Längsachse L durch den Rohrleitungsabschnitt 7 an der dritten Öffnung 8c angeordnet. Bei dem Messrohr 7 kann es sich sowohl um ein einstückig hergestelltes Bauteil als auch um ein aus mehreren Komponenten zusammengefügtes Bauteil handeln.

Alle Punkte in einem ersten Teilbereich 11 der Wandung des Rohrleitungsabschnitts 8, welcher die dritte Öffnung 8c definiert, liegen erfindungsgemäß in einer Ebene. In dieser Hinsicht kann der erste Teilbereich 11 derart beschaffen sein, dass er im Wesentlichen nur die Punkte, welche die Öffnung 8c definieren, umfasst. Alternativ kann der Teilbereich auch einen, bevorzugt ringförmigen Abschnitt der Wandung des Rohrleitungsabschnitts 8 um die Öffnung 8c herum umfassen.

Das Messgerät 1 ist derart in den rohrförmigen Körper 9 eingebracht, dass die Elektrodenbaugruppe 4 im Wesentlichen frontbündig mit der Wandung des Rohrleitungsabschnitts 8 im ersten Teilbereich 11 abschließt. Das erfindungsgemäße Messrohr 7 ermöglicht entsprechend eine spalt- und/oder totraumfreie Anordnung, beispielsweise für den Einsatz in der sterilen Verfahrenstechnik. Gängige Hygienebestimmungen können also auf einfache Weise, und ohne weitere Modifikation des jeweiligen Messgeräts, erfüllt werden.

Das Messgerät 1 ist über die Befestigungseinheit 12 [nicht sichtbar] an dem rohrförmigen Körper 9 befestigt. Die Befestigungseinheit 12 ist zu diesem Zweck an das jeweilige Messgerät angepasst. Möglich sind beispielsweise Schraub- oder Klemmverbindungen. Ferner umfasst die Anordnung in dem gezeigten Beispiel ein Dichtelement 13 in Form eines O-Rings. Dies ist allerdings für die vorliegende Erfindung keine notwendige Komponente.

Für das gezeigte Beispiel ist das Messrohr 7 so ausgestaltet, dass ein Flächeninhalt einer Querschnittsfläche des Rohrleitungsabschnitts 7 entlang der Längsachse L konstant ist. Dies ist am besten anhand der Figuren Fig. 2b-2d zu sehen, welche allesamt Seitenansichten des Messrohres 7 zeigen. Damit die Wandung des Rohrleitungsabschnitts 8 im ersten Teilbereich 11 planar ausgebildet werden kann, wird die Querschnittsfläche A des Rohrleitungsabschnitts im dem rohrförmigen Körper zugewandten Bereich abgeflacht, wie in Fig. 2b ersichtlich. Das von der ursprünglich kreisrunden Querschnittsfläche A verlorene Flächensegment a wird der Querschnittsfläche A jedoch wieder hinzugefügt, wie in Fig. 2c gezeigt. Zu diesem Zweck wird der Krümmungsradius in den an den planar ausgebildeten Teilbereich 11 angrenzten Bereichen derart gewählt, dass der ursprünglich kreisrunden Querschnittsfläche A zwei zusätzliche Segmente b und c hinzugefügt werden. Die Geometrien des Segmente a, b und c werden dabei so gewählt, dass der Flächeninhalt der Querschnittsfläche A in jedem Punkt entlang der Längsachse konstant bleibt. Nur die Form der Querschnittsfläche A variiert für das gezeigte Beispiel also entlang der Längsachse L. Eine Seitenansicht des Messrohrs 7 mit dem planar ausgebildeten Teilbereich 11 und einem in den rohrförmigen Körper 9 integrierten Messgerät 1 ist schließlich in Fig. 2d gezeigt. Aufgrund der planaren Ausbildung der Wandung im ersten Teilbereich 11 kann eine im Wesentlichen spalt- und/oder totraumfreie Anordnung erzielt werden, ohne dass es einer weiteren Modifikation des Messgeräts bedarf.

Das Messrohr 7 entsprechend dem Ausführungsbeispiel aus Fig. 2 ist ferner derart ausgestaltet, dass die Querschnittsfläche A in den beiden Endbereichen des Rohrleitungsabschnitts 7, also in den Bereichen der ersten und zweiten Öffnung 8a,8b, jeweils kreisförmig ist. Entlang des Längsachse L durch den Rohrleitungsabschnitt entspricht dabei der Flächeninhalt der Querschnittsfläche A dem Flächeninhalt einer Querschnittsfläche eines bestehenden Rohrleitungssystems, in welches das Messrohr 7 integriert werden soll.

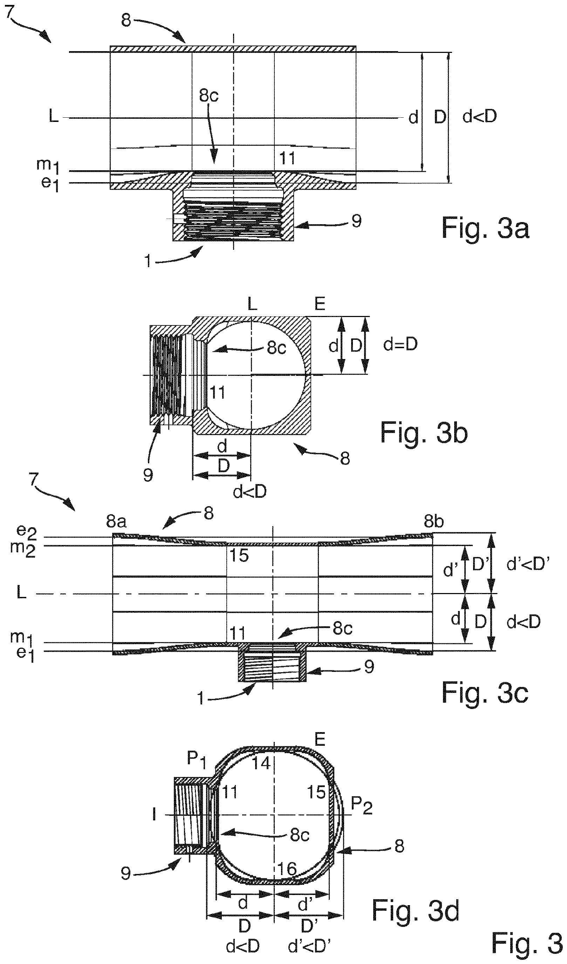

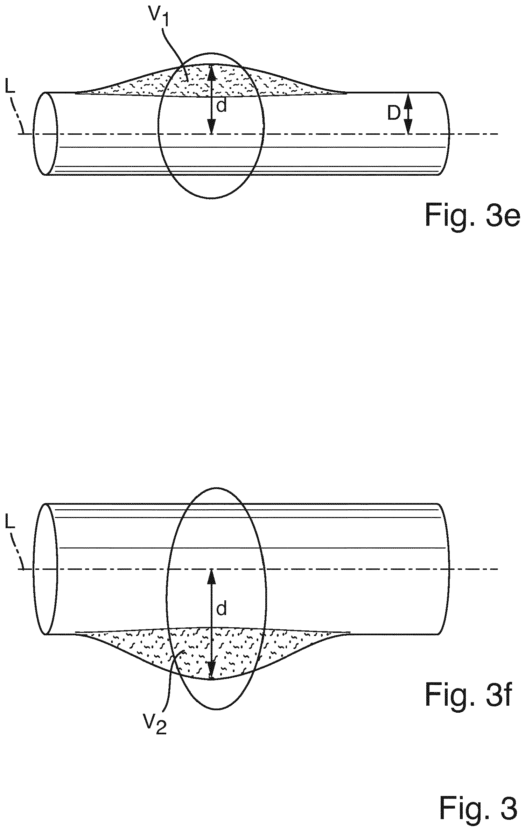

Mögliche Ausgestaltungen zur Vermeidung der Bildung von Ablagerungen und/oder Luftblasen innerhalb des Messrohres 7 sind in Fig. 3 gezeigt. Wie aus dem Längsschnitt in Fig. 3a ersichtlich, ist ein Abstand d zwischen einer gedachten Gerade m₁ im Bereich der Wandung, insbesondere der Innenwandung, des Rohrleitungsabschnitts 8 im Bereich der Öffnung und der Längsachse L durch den Rohrleitungsabschnitt 8 im Bereich der Öffnung kleiner gleich einem Abstand D zwischen einer gedachten Gerade ei im Bereich der Wandung, insbesondere der Innenwandung, des Rohrleitungsabschnittes 8 in zumindest einem der zwei Endbereiche des Rohrleitungsabschnitts 8 und der Längsachse durch den Rohrleitungsabschnitt 8 im Bereich der Öffnung ist. Der Abstand D entspricht dabei dem Radius eines bestehenden Rohrleitungssystems [nicht gezeigt].

Ähnliche Überlegungen gelten auch im Falle von mehreren weiteren planar ausgebildeten Teilbereichen. In Fig. 3c ist aus diesem Grund ein Längsschnitt eines Messrohrs 7 mit drei weiteren planar ausgebildeten Teilbereichen 14, 15 und 16 gezeigt, von denen nur einer dem ersten Teilbereich gegenüberliegender Teilbereich 15 sichtbar ist. In diesem Falle gilt, dass zusätzlich zum Falle in Fig. 3a ein Abstand d' zwischen einer gedachten Gerade m2 im Bereich der Wandung, insbesondere der Innenwandung, des Rohrleitungsabschnitts 8 im Bereich der Öffnung und der Längsachse L durch den Rohrleitungsabschnitt 8 im Bereich der Öffnung kleiner gleich einem Abstand D' zwischen einer gedachten Gerade e₂ im Bereich der Wandung, insbesondere der Innenwandung, des Rohrleitungsabschnittes 8 in zumindest einem der zwei Endbereiche des Rohrleitungsabschnitts 8 und der Längsachse durch den Rohrleitungsabschnitt 8 im Bereich der Öffnung sein muss. Analoge Überlegungen gelten für weitere mögliche Ausgestaltungen mit drei oder mehr planar ausgebildeten Teilbereichen.

Bei den beiden gedachten Geraden m₁ und m₂ handelt es sich um zwei Geraden entlang der Innenwandung des Rohrleitungsabschnitts 8 im ersten Teilbereich 11 des Rohrleitungsabschnitts 8. Der Abstand d bzw. d' ist kleiner gleich dem Abstand D bzw. D'. Wie insbesondere aus Fig. 3b ersichtlich wird, können die Abstände d bzw. d' entlang der Längsachse L durch den Rohrleitungsabschnitt 8 variieren. In den beiden Endbereichen des Rohrleitungsabschnitts 8, also in den Bereichen der ersten und zweiten Öffnungen 8a, 8b entspricht der Abstand d im Wesentlichen dem Abstand D, während er zumindest in dem Bereich, in welchem der rohrförmige Körper 9 angeordnet ist kleiner ist als der Abstand D.

Die dritte Öffnung 8c mit dem rohrförmigen Körper 9 kann sich grundsätzlich an verschiedenen Positionen befinden. Bevorzugt ist jedoch eine Ausrichtung des Messrohres 7, bei welchem das Messgerät 1 horizontal in den rohrförmigen Körper 9 eingebracht wird.

Ein gegenüber den Figuren Fig. 3a und 3c um 90° gedrehte Ansicht des jeweiligen Messrohres 7 ist zu besseren Übersicht in den Figuren Fig. 3b und 3d zu sehen. Die Abstände d bzw. d' sind zumindest im Bereich des ersten Teilbereichs 11 kleiner gleich den Abständen D bzw. D'.

In Fig. 3e ist ein Rohrleitungsabschnitt 8 illustriert, bei welchem im durch den Kreis markierten Bereich der Abstand d größer als der Abstand D ist. In dem gezeigten Beispiel kommt es im Bereich v₁ des Innenvolumens des Rohrleitungsabschnitts 8 zur Bildung von Luftblasen. Analog kommt es im Fall einer Ausgestaltung wie in Fig. 3d zur Bildung von Ablagerungen im Bereich v₂ des Innenvolumens des Rohrleitungsabschnitts 8.

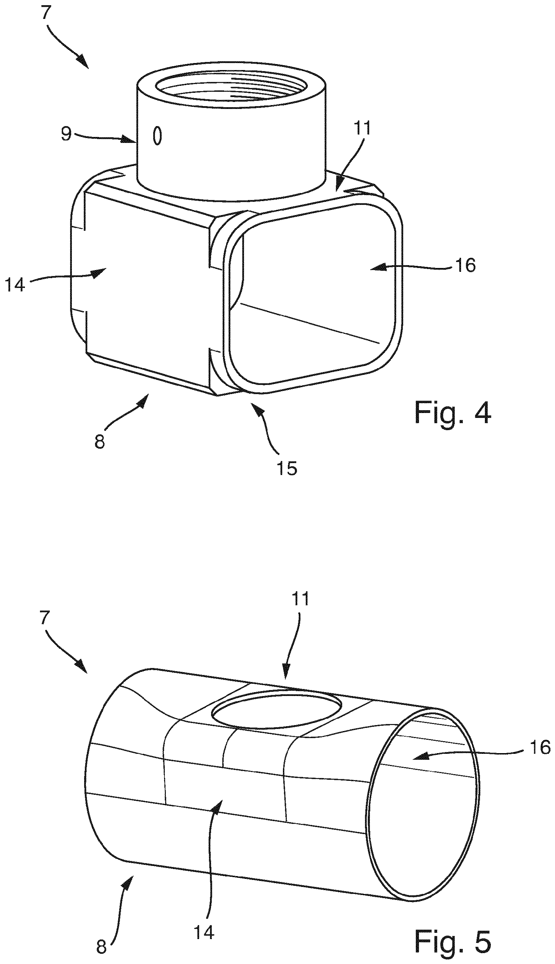

Eine perspektivische Ansicht eines Messrohres 7 mit neben dem ersten Teilbereich 11 drei weiteren planar ausgebildeten Teilbereichen14,15,16 ist in Fig. 4 gezeigt. Der Rohrleitungsabschnitt 8 weist abschnittsweise eine Querschnittsfläche A in Form eines Vierecks mit abgerundeten Ecken auf. Der Übersicht halber ist in Fig. 4 nur ein Ausschnitt des Messrohres 7 gezeigt. Die Endbereiche des Rohrleitungsabschnitts 8 mit jeweils kreisrunder Querschnittsfläche sind nicht dargestellt. Im ersten planar ausgebildeten Teilbereich 11 ist die dritte Öffnung 8c mit dem rohrförmigen Körper angeordnet. Die vier Teilbereiche 11,14,15 und 16 sind bevorzugt derart entlang einer Umfangslinie der Querschnittsfläche A angeordnet, dass sich ein Quadrat mit abgerundeten Ecken ergibt. Je zwei durch die planaren Flächen in den vier Teilbereichen 11,14,15 und 16 aufgespannte Ebenen sind also parallel zueinander angeordnet. Die vier Teilbereiche 11,14,15 und 16 weisen ferner die gleiche Länge parallel zur Längsachse L durch den Rohrleitungsabschnitt 8 auf und sind jeweils im gleichen Abstand zu den beiden hier nicht gezeigten Endbereichen des Rohrleitungsabschnitts 8 angeordnet.

Eine weitere Ausgestaltung des erfindungsgemäßen Messrohres 7 mit neben dem ersten Teilbereich zwei weiteren planar ausgebildeten Teilbereichen 11,14,16 ist schließlich in Fig. 5 gezeigt. Im Gegensatz zu Fig. 4 ist ein der dritten Öffnung 8c gegenüberliegender Teilbereich nicht planar ausgebildet. Es sei darauf verwiesen, dass die Erfindung jedoch keineswegs auf Ausgestaltungen mit einem, drei oder vier planar ausgebildeten Teilbereichen beschränkt ist. Vielmehr sind zahlreiche weitere Ausgestaltungen mit unterschiedlicher Anzahl und unterschiedlicher Anordnungen verschiedener planar ausgebildeter Teilbereiche denkbar und fallen unter die vorliegende Erfindung.

Das erfindungsgemäße Messrohr 7 erlaubt vorteilhaft die Realisierung einer hygienischen, gängigen Bestimmungen genügenden, Messstelle. Insbesondere im Falle von Rohrsystemen mit vergleichsweise geringen Rohrdurchmessern, z. B. DN32, ist diese Lösung vorteilhaft, da der jeweilige Sensor 1 zur Erfüllung der jeweiligen Hygiene-Anforderungen selbst nicht modifiziert werden muss. Eine im Wesentlichen frontbündige und insbesondere spalt- und/oder totraumfreie Anordnung 10 kann durch gezielte Anpassung des Messrohres 7 erreicht werden.

### Bezugszeichenliste

- 1: kapazitiver/konduktiver Sensor
- 2: Sensoreinheit
- 3: Elektronikeinheit
- 4: Elektrodenbaugruppe
- 5a-5c: Elektroden
- 6: Gehäuse
- 6a: Prozessanschluss
- 7: Messrohr
- 8: Rohrleitungsabschnitt
- 8a-8c: erste, zweite, dritte Öffnung
- 9: rohrförmiger Körper
- 10: erfindungsgemäße Anordnung
- 11: erster Teilbereich
- 12: Befestigungseinheit
- 13: Dichtelement
- 14: zweiter Teilbereich
- 15: dritter Teilbereich
- 16: vierter Teilbereich

- L: Längsachse durch den Rohrleitungsabschnitt
- I: Längsachse durch den rohrförmigen Körper
- A: Querschnittsfläche des Rohrleitungsabschnitts
- a,b,c: Segmente der Querschnittsfläche A
- m₁,m₂: gedachte Geraden entlang der Wandung des Rohrleitungsabschnitts im Bereich der Öffnung
- e₁,e₂: gedachte Geraden entlang der Wandung des Rohrleitungsabschnitts in einem Endbereich
- P₁,P₂: Punkte entlang der Geraden m₁,m₂
- D: Durchmesser eines bestehenden Rohrleitungssystems
- d: Abstand zwischen m₁,m₂
- v₁,v₂: Bereiche des Innenvolumens des Rohrleitungsabschnitts

## Patentansprüche

1. Messrohr (7) zum Führen eines Mediums,
umfassend zumindest einen Rohrleitungsabschnitt (8) und zumindest einen rohrförmigen Körper (9) zur Aufnahme zumindest einer Komponente (4) eines Messgeräts (1), wobei der rohrförmige Körper (9) in einem ersten Endbereich an oder in einer Öffnung (8c) in einer Wandung entlang einer Längsachse (L) des Rohrleitungsabschnitts (8) angeordnet ist,
wobei sich alle Punkte zumindest eines ersten Teilbereichs (11) der Wandung, insbesondere Innenwandung, des Rohrleitungsabschnitts (8), welcher die Öffnung (8c) definiert, in einer Ebene befinden,
wobei
ein Flächeninhalt einer Querschnittsfläche (A) des Rohrleitungsabschnitts (8) entlang einer Längsachse (L) durch den Rohrleitungsabschnitt (8) im Wesentlichen konstant ist, und
wobei eine Form der Querschnittsfläche (A) des Rohrleitungsabschnitts (8) entlang einer Längsachse (L) durch den Rohrleitungsabschnitt (8), insbesondere kontinuierlich, variiert.

2. Messrohr (7) nach Anspruch 1,
wobei eine Längsachse (I) des rohrförmigen Körpers (9) im Wesentlichen in einem vorgebbaren Winkel, insbesondere senkrecht, zur Längsachse (L) des Rohrleitungsabschnitts (8) verläuft.

3. Messrohr (7) nach Anspruch 1 oder 2,
wobei es sich bei der zumindest einen Komponente (4) des Messgeräts (19 um eine Komponente (4) eines Sensorelements (2), handelt.

4. Messrohr (7) nach Anspruch 3,
wobei der rohrförmige Körper (9) eine Befestigungseinheit (12), insbesondere ein Gewinde, zur Befestigung der zumindest einen Komponente (4) an oder in dem rohrförmigen Körper (9) umfasst.

5. Messrohr (7) nach zumindest einem der vorherigen Ansprüche,
wobei die Querschnittsfläche (A) des Rohrleitungsabschnitts (8) zumindest in einem Endbereich des Rohrleitungsabschnitts (8) im Wesentlichen die gleiche Form wie diejenige einer Querschnittsfläche einer bestehenden Rohrleitung aufweist.

6. Messrohr (7) nach zumindest einem der vorherigen Ansprüche,
wobei ein Abstand (d) zwischen einer gedachten Gerade (m1) im Bereich der Wandung, insbesondere der Innenwandung, des Rohrleitungsabschnitts (8) im Bereich der Öffnung (8c) und der Längsachse (L) durch den Rohrleitungsabschnitt (8) im Bereich der Öffnung kleiner gleich einem Abstand (D) zwischen einer gedachten Gerade (e₁) im Bereich der Wandung, insbesondere der Innenwandung, des Rohrleitungsabschnittes (8) in zumindest einem der zwei Endbereiche des Rohrleitungsabschnitts (8) und der Längsachse durch den Rohrleitungsabschnitt (8) im Bereich der Öffnung ist.

7. Messrohr (7) nach zumindest einem der vorherigen Ansprüche,
wobei die Wandung, insbesondere Innenwandung des Rohrleitungsabschnitts (8) in zumindest zwei weiteren Teilbereichen (11,14,16) planar ausgebildet ist derart, dass je zwei der Teilbereiche zumindest abschnittsweise durch einen gewölbt ausgebildeten Abschnitt der Wandung insb. Innenwandung des Rohrleitungsabschnitts (8) verbunden sind.

8. Anordnung (10) zur Bestimmung und/oder Überwachung zumindest einer Prozessgröße eines Mediums in einer Rohrleitung, zumindest umfassend
- ein Messgerät (1) zur Bestimmung und/oder Überwachung der zumindest einen Prozessgröße mit zumindest einem Sensorelement (2) und einer Elektronikeinheit (3), und
- ein Messrohr (7) nach zumindest einem der Ansprüche 1-7, in welches zumindest eine Komponente (4) des Messgeräts (1), insbesondere lösbar, einbringbar ist.

9. Anordnung (10) nach Anspruch 8,
wobei die zumindest eine Komponente (4) derart ausgestaltet ist, dass sie im Falle, dass sie in den rohrförmigen Körper (9) eingebracht ist, im Wesentlichen frontbündig mit der Wandung des Rohrleitungsabschnitts (8) im ersten Teilbereich (11), abschließt.

10. Anordnung (10) nach Anspruch 9,
wobei ein Übergang zwischen dem rohrförmigen Körper (9) und dem ersten Teilbereich (11) der Wandung des Rohrleitungsabschnitts (8) im Wesentlichen spaltfrei und/oder totraumfrei ist.

11. Anordnung (10) nach zumindest einem der Ansprüche 8-10,
wobei die zumindest eine Komponente (4) mittels eines Dichtelements (13) in den rohrförmigen Körper eingebracht ist.

12. Anordnung (10) nach Anspruch 11,
wobei es sich bei dem Dichtelement (13) um einen O-Ring handelt.

13. Anordnung (10) nach einem der Ansprüche 8-12,
wobei es sich bei dem Messgerät (1) um ein kapazitives und/oder konduktives Messgerät handelt.

## Claims

1. Measuring tube (7) designed to conduct a medium,
comprising at least a pipe section (8) and at least a tubular body (9) designed to receive at least one component (4) of a measuring device (1), wherein the tubular body (9) is arranged in a first end section on or in an opening (8c) in a wall along a longitudinal axis (L) of the pipe section (8),
wherein all the points of at least a first subsection (11) of the wall - particularly the interior wall of the pipe section (8) that defines the opening (8c) - are located on a plane,
wherein an area of a cross-sectional area (A) of the pipe section (8) is essentially constant along a longitudinal axis (L) through the pipe section (8), and
wherein a form of the cross-sectional area (A) of the pipe section (8) varies along a longitudinal axis (L) through the pipe section (8), particularly in a continuous manner.

2. Measuring tube (7) as claimed in Claim 1,
wherein a longitudinal axis (I) of the tubular body (9) extends essentially in a predefinable angle, particularly perpendicular, to the longitudinal axis (L) of the pipe section (8).

3. Measuring tube (7) as claimed in Claim 1 or 2,
wherein the at least one component (4) of the measuring device (19) is a component (4) of a sensor element (2).

4. Measuring tube (7) as claimed in Claim 3,
wherein the tubular body (9) comprises a fastening unit (12), particularly a thread, said unit being designed to fasten the at least one component (4) on or in the tubular body (9).

5. Measuring tube (7) as claimed in at least one of the previous claims,
wherein the cross-sectional area (A) of the pipe section (8) has, at least in an end section of the pipe section (8), essentially the same shape as that of a cross-sectional area of an existing pipe.

6. Measuring tube (7) as claimed in at least one of the previous claims,
wherein a distance (d) between an imaginary straight line (m1) in the area of the wall, particularly of the interior wall, of the pipe section (8) in the area of the opening (8c) and the longitudinal axis (L) through the pipe section (8) in the area of the opening is less than or equal to a distance (D) between an imaginary straight line (e₁) in the area of the wall, particularly of the interior wall, of the pipe section (8) in at least one of the two end areas of the pipe section (8) and the longitudinal axis through the pipe section (8) in the area of the opening.

7. Measuring tube (7) as claimed in at least one of the previous claims,
wherein the wall, particularly the interior wall of the pipe section (8), is designed in a planar manner in at least two additional subsections (11, 14, 16) in such a way that each of the two subsections are connected at least in part by an arched section of the wall, particularly of the interior wall of the pipe section (8).

8. Arrangement (10) designed to determine and/or monitor at least a process variable of a medium flowing through a pipe, said arrangement comprising at least
- a measuring device (1) designed to determine and/or monitor the at least one process variable with at least a sensor element (2) and an electronic unit (3), and
- a measuring tube (7) as claimed in at least one of the Claims 1 to 7, wherein at least one component (4) of the measuring device (1) can be introduced in the tube, particularly in a detachable manner.

9. Arrangement (10) as claimed in Claim 8,
wherein the at least one component (4) is designed in such a way that in the event that it is introduced in the tubular body (9), it is essentially flush with the wall of the pipe section (8) in the first subsection (11).

10. Arrangement (10) as claimed in Claim 9,
wherein a transition between the tubular body (9) and the first subsection (11) of the wall of the pipe section (8) is essentially free from gaps and/or dead space.

11. Arrangement (10) as claimed in at least one of the Claims 8 to 10,
wherein the at least one component (4) is introduced in the tubular body by means of a sealing element (13).

12. Arrangement (10) as claimed in Claim 11,
wherein the sealing element (13) is an O-ring.

13. Arrangement (10) as claimed in one of the Claims 8 to 12,
wherein the measuring device (1) is a capacitive and/or conductive measuring device.

## Revendications

1. Tube de mesure (7) destiné à guider un produit,
lequel tube de mesure comprend au moins un tronçon de conduite (8) et au moins un corps tubulaire (9) destiné à recevoir au moins un composant (4) d'un appareil de mesure (1), le corps tubulaire (9) étant disposé dans une première zone d'extrémité sur ou dans une ouverture (8c) dans une paroi le long d'un axe longitudinal (L) du tronçon de conduite (8),
tous les points d'au moins une première zone partielle (11) de la paroi - notamment de la paroi intérieure du tronçon de conduite (8), laquelle zone définit l'ouverture (8c) - se trouvant dans un plan,
une superficie d'une surface de section (A) du tronçon de conduite (8) étant pour l'essentiel constante le long d'un axe longitudinal (L) à travers le tronçon de conduite (8), et
une forme de la surface de section (A) du tronçon de conduite (8) variant le long d'un axe longitudinal (L) à travers le tronçon de conduite (8), notamment de manière continue.

2. Tube de mesure (7) selon la revendication 1,
pour lequel un axe longitudinal (l) du corps tubulaire (9) s'étend pour l'essentiel selon un angle pouvant être prédéfini, notamment perpendiculairement, par rapport à l'axe longitudinal (L) du tronçon de conduite (8).

3. Tube de mesure (7) selon la revendication 1 ou 2,
pour lequel l'au moins un composant (4) de l'appareil de mesure (19) est un composant (4) d'un élément capteur (2).

4. Tube de mesure (7) selon la revendication 3,
pour lequel le corps tubulaire (9) comprend une unité de fixation (12), notamment un filetage, laquelle unité est destinée à fixer l'au moins un composant (4) sur ou dans le corps tubulaire (9).

5. Tube de mesure (7) selon au moins l'une des revendications précédentes, pour lequel la surface de section (A) du tronçon de conduite (8) présente, au moins dans une zone d'extrémité du tronçon de conduite (8), pour l'essentiel la même forme que celle d'une surface de section d'une conduite existante.

6. Tube de mesure (7) selon au moins l'une des revendications précédentes, pour lequel une distance (d) entre une droite imaginaire (m1) dans la zone de la paroi, notamment de la paroi intérieure, du tronçon de conduite (8) dans la zone de l'ouverture (8c) et l'axe longitudinal (L) à travers le tronçon de conduite (8) dans la zone de l'ouverture est inférieure ou égale à une distance (D) entre une droite imaginaire (e₁) dans la zone de la paroi, notamment de la paroi intérieure, du tronçon de conduite (8) dans au moins une des deux zones d'extrémité du tronçon de conduite (8) et l'axe longitudinal à travers le tronçon de conduite (8) dans la zone de l'ouverture.

7. Tube de mesure (7) selon au moins l'une des revendications précédentes, pour lequel la paroi, notamment la paroi intérieure du tronçon de conduite (8), est conçue de manière plane dans au moins deux autres zones partielles (11, 14, 16), de telle sorte que deux des zones partielles sont respectivement reliées au moins par tronçons par un tronçon conçu de manière bombée de la paroi, notamment de la paroi intérieure du tronçon de conduite (8)

8. Dispositif (10) destiné à la détermination et/ou à la surveillance d'au moins une grandeur de process d'un produit s'écoulant dans une conduite, lequel dispositif comprend au moins
- un appareil de mesure (1) destiné à déterminer et/ou à surveiller l'au moins une grandeur de process avec au moins un élément capteur (2) et une unité électronique (3), et
- un tube de mesure (7) selon au moins l'une des revendications 1 à 7, tube dans lequel au moins un composant (4) de l'appareil de mesure (1) peut être inséré, notamment de manière amovible.

9. Dispositif (10) selon la revendication 8,
pour lequel l'au moins un composant (4) est conçu de telle sorte que, dans le cas où il est introduit dans le corps tubulaire (9), l'extrémité dudit composant affleurant sensiblement la paroi du tronçon de conduite (8) dans la première zone partielle (11).

10. Dispositif (10) selon la revendication 9,
pour lequel une transition entre le corps tubulaire (9) et la première zone partielle (11) de la paroi du tronçon de conduite (8) est pour l'essentiel exempte de fente et/ou d'espace mort.

11. Dispositif (10) selon au moins l'une des revendications 8 à 10,
pour lequel l'au moins un composant (4) est inséré dans le corps tubulaire au moyen d'un élément d'étanchéité (13).

12. Dispositif (10) selon la revendication 11,
pour lequel l'élément d'étanchéité (13) est un joint torique.

13. Dispositif (10) selon l'une des revendications 8 à 12,
pour lequel l'appareil de mesure (1) est un appareil de mesure capacitif et/ou conductif.
